# EUROPEAN PATENT SPECIFICATION

(11) **EP 2 728 814 B1**
(45) Date of publication and mention of the grant of the patent: **10.02.2016**
(21) Application number: 12803784.3
(22) Date of filing: 23.05.2012
(51) Int. Cl.: H04L 12/913, H04L 12/723

(54) **METHOD AND DEVICE FOR ACQUIRING IDENTIFIER OF MAINTENANCE END POINT**
VERFAHREN UND VORRICHTUNG ZUR ERFASSUNG EINES IDENTIFIKATORS FÜR EINEN WARTUNGSENDPUNKT
PROCÉDÉ ET DISPOSITIF D'ACQUISITION D'IDENTIFICATEUR DE POINT D'EXTRÉMITÉ DE MAINTENANCE

(30) Priority: 30.06.2011 CN 201110181374
(43) Date of publication of application: 07.05.2014
(73) Proprietor: ZTE Corporation, Shenzhen, Guangdong 518057 (CN)
(72) Inventor: ZHANG, Fei, Shenzhen Guangdong 518057 (CN); BAO, Xiao, Shenzhen Guangdong 518057 (CN)
(74) Representative: Tischner, Oliver
(86) International application number: PCT/CN2012/075951
(87) International publication number: WO 2013/000347

(56) References cited:
- CN-A- 101 388 823
- CN-A- 101 945 049
- US-A1- 2003 137 971
- US-B1- 7 742 482
- ZHANG, F. ET AL. RSVP-TE EXTENTIONS TO EXCHANGE MPLS-TP TUNNEL NUMBERS 16 September 2011, XP055141735
- BOCCI, M. ET AL. MPLS-TP IDENTIFIERS 14 June 2011, XP015076465

## Description

### TECHNICAL FIELD

The disclosure relates to the field of data communication technology, and in particular to a method and a device for acquiring an Identifier (ID) of a Maintenance End Point (MEP).

### BACKGROUND

In networks such as an Internet Protocol (IP)/Multiprotocol Label Switching (MPLS) network of data communication, an MPLS-Transport Profile (MPLS-TP) network, and a Generalized MPLS (GMPLS) network, a Traffic Engineering-Label Switching Path (TE-LSP) is established by a Resource Reservation Protocol-TE (RSVP-TE). TE-LSPs include unidirectional TE-LSPs and bidirectional TE-LSPs. Request For Comments (RFC)3209 specifies an establishment solution for an MPLS-based TE-LSP while RFC3473 specifies an establishment solution for a GMPLS-based TE-LSP.

As specified in the RFC3473, establishment of a bidirectional TE-LSP includes: a head node is configured with a TE tunnel first, and then initiates signalling including a tunnel ID, a tunnel transmitting end address, a tunnel destination end address, an extended tunnel ID and an LSP ID of the LSP. Five-element-group information uniquely identifies an LSP, in which the tunnel ID is in one-to-one correspondence with a service. However, services may be included on different LSPs in the same tunnel. These different LSPs are used for protection or load sharing. As described in the RFC3473, the tunnel ID is only configured under a tunnel transmitting end (head node). However, in order to enable a service to also be accessed to a tunnel destination end (destination node), a unique ID needs to be provided for the tunnel destination end. The ID may be acquired by matching a three-element-group: an address of the tunnel transmitting end, an address of the tunnel destination end, and a tunnel ID. For example, in patent application publication CN 101388823A, the same tunnel ID is assigned to the first logic port of the first device and the second logic port of the second device. However, such an acquisition solution needs to match relatively long characters, thus resulting in relatively low search efficiency. Nevertheless, a method in the industry at present is to configure a local tunnel ID on the destination end, and the local tunnel ID does not need to be included in signalling to be learned by other nodes on the path.

A working mechanism of a set of Operation, Administration and Maintenance (OAM) is defined in the present MPLS-TP standards, and an OAM functional entity of an MPLS-TP is defined in related standards, including MEPs located on opposite ends of an MPLS-TP transport path, and a Maintenance Intermediate Point (MIP) located in the middle of the MPLS-TP transport path. An MEP ID of a common-path bidirectional TE-LSP has the following format: Node_ID::Tunnel_Num::LSP_Num. In addition, two OAM functions are defined as follows in related standards: Continuity Check (CC) and Connectivity Verification (CV). The CV detection is intended to verify misconnection and mismatching.

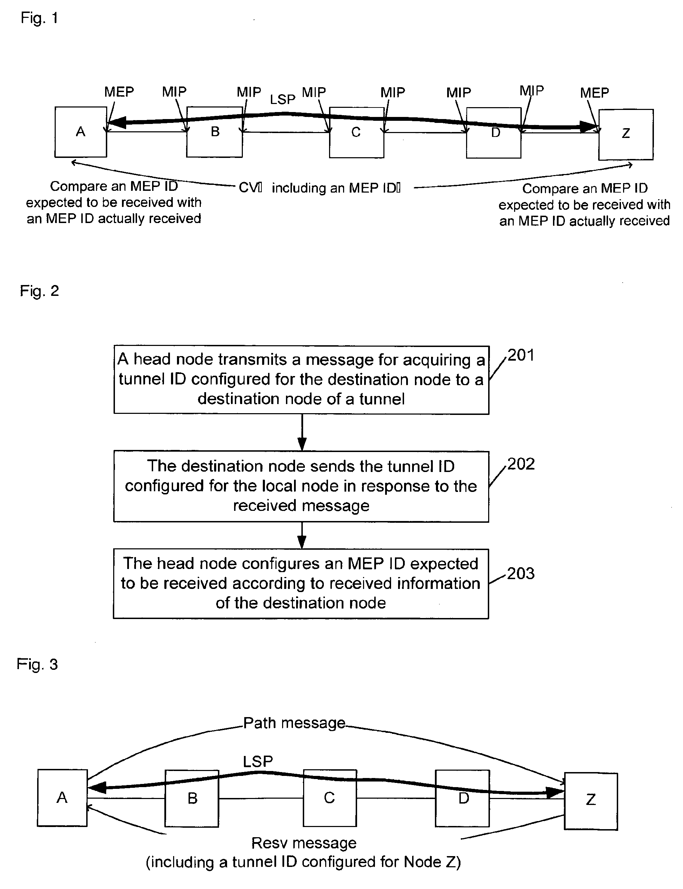

Fig. 1 shows a schematic diagram of a CV detection process specified in an MPLS-TP standard. Referring to Fig. 1, for an LSP in Fig. 1, it is assumed that Node A is a westward node while Node Z is an eastward node; an MEP ID configured for the head node A of the LSP is: the node ID of the Node A::the tunnel ID configured under the Node A::the LSP ID initiated by the Node A; an MEP ID configured for the destination node Z of the LSP is: the node ID of the Node Z::the tunnel ID configured for the Node Z::the LSP ID initiated by the Node A. Although a tunnel ID is configured for the tunnel destination node Z to simplify service access, the following problems may be caused when the CV detection is performed on a path if the head node A fails to learn the tunnel ID:
The MEP ID (the node ID of the Node A::the tunnel ID configured under the Node A::the LSP ID initiated by the Node A) of the local end will be inserted to a CV message transmitted by the Node A. After receiving the CV message, the Node Z will compare the MEP ID with an MEP ID expected to be received. If the MEP ID is consistent with the MEP ID expected to be received, there is no misconnection and mismatching. If the MEP ID is not consistent with the MEP ID expected to be received, there is misconnection and mismatching. In addition, the Node Z has learned, through a signalling message, the following information of the Node A: the node ID of the Node A, the tunnel ID configured under the Node A and the LSP ID initiated by the Node A, thus the process can be implemented successfully.

Then in consideration of the other direction, the MEP ID (the node ID of the Node Z::the tunnel ID configured under the Node Z::the LSP ID initiated by the Node A) of the local end will also be inserted to a CV message transmitted by the node Z. After receiving the CV message, the Node A will also compare the MEP ID with an MEP ID expected to be received. If the MEP ID is consistent with the MEP ID expected to be received, there is no misconnection and mismatching. If the MEP ID is not consistent with the MEP ID expected to be received, there is misconnection and mismatching. However, the Node A only learns, through the signalling message, the following information of Node Z previously: the node ID of the Node Z and the LSP ID initiated by the Node A, and fails to learn the tunnel ID configured under the Node Z. Therefore, the Node A fails to beforehand configure the MEP ID expected to be received. The process cannot be implemented successfully due to the lack of the tunnel ID configured under the Node Z.

Currently, there are many methods for a head node to learn a tunnel ID configured under a destination node. For example, by configuring TE tunnels statically, a Network Management System (NMS) will learn information of a TE tunnel on each node. The NMS gathers a tunnel ID of each head node/destination node, and notifies the destination node/head node through a gateway node. Since the NMS needs to gather information of TE tunnels configured for the whole network in such a method, the method can be easily applied in a single domain. However, the method, which will involve the problem of interconnection and interworking of network management among different domains in the case of cross-domain TE-LSPs, is quite complicated to implement.

### SUMMARY

In view of this, the disclosure is intended to provide a method and a device for acquiring an ID of an MEP, which can better implement CV detection of an OAM function.

To this end, a technical solution of the disclosure is implemented as follows.

A method for acquiring an ID of an MEP includes:
when a head node of a tunnel establishes a bidirectional LSP, the head node of the tunnel transmits to a destination node of the tunnel a message for acquiring a tunnel ID configured for the destination node of the tunnel; and
the destination node sends a message including the tunnel ID configured for the destination node to the head node in response to the message received from the head node.

Further, the method may further include:
the head node configures an MEP ID expected to be received as a received node ID of the destination node, the received tunnel ID configured for the destination node and an LSP ID initiated by the head node according to received information of the destination node.

When the head node establishes the bidirectional LSP, the process the head node transmits the message for acquiring the tunnel ID of the destination node of the tunnel to the destination node may include:
the head node adds an object used for acquiring the tunnel ID configured for the destination node to an RSVP-TE Path message, and transmits the RSVP-TE Path message to the destination node.

The process that the destination node sends the message including the tunnel ID configured for the destination node to the head node may include:
after receiving the message, the destination node fills the object with the tunnel ID configured for the destination node and sends the object to the head node through a Reservation (Resv) message;
alternatively,
when the destination node fails to identify the object, the destination node sends a Path Err message to the head node.

In the case that the object is provided with a flag bit, the process that the destination node sends the message including the tunnel ID configured for the destination node to the head node may include: in the case the object is provided with a flag bit,
when the flag bit is set, the destination node is configured with a tunnel ID included in the object, and sends the object to the head node through a Resv message; and when it is unable to configure the tunnel ID included in the object for the destination node, the destination node sends a PathErr message to the head node; or
when the flag bit is not set, the destination node is configured with the tunnel ID included in the object or fills the object with a local tunnel ID, and the destination node sends the object to the head node through a Resv message.

When the head node establishes the bidirectional LSP, the process that the head node transmits to the destination node the message for acquiring the tunnel ID configured for the destination node of the tunnel may include:
the head node sets a flag bit into a Flag of an LSP Attribute object included in a RSVP-TE Path message, and transmits the RSVP-TE Path message to the destination node, so as to request the destination node to send the tunnel ID configured for the destination node to the head node;
wherein, the process that the destination node sends the message including the tunnel ID configured for the destination node to the head node may include:
   the destination node generates an object including a local tunnel ID according to the flag bit in the received RSVP-TE Path message, and sends the object to the head node through a Resv message; or
   the destination node places the local tunnel ID in an existing object according to the flag bit in the received RSVP-TE Path message, and sends the existing object to the head node through a Resv message.

When the head node establishes the bidirectional LSP, the process that the head node transmits to the destination node the message for acquiring the tunnel ID configured for the destination node of the tunnel may include:
the head node adds a sub-Type, Length, Value (TLV) of a predefined OAM Configuration TLV or a sub-TLV of a Bidirectional Forwarding Detection (BFD) Configuration sub-TLV into a RSVP-TE Path message, and transmits the RSVP-TE Path message to the destination node, so as to request the destination node to place the tunnel ID configured for the destination node in the sub-TLV;
wherein the process that the destination node sends the message including the tunnel ID configured for the destination node to the head node may include:
   the destination node receives the sub-TLV included in the RSVP-TE Path message, fills the sub-TLV with the local tunnel ID, and sends the sub-TLV to the head node through a Resv message.

A device for acquiring an ID of an MEP includes a message transmitting module and a message receiving module, wherein
the message transmitting module is configured to, when a head node establishes a bidirectional LSP, transmit a message for acquiring a tunnel ID configured for a destination node of a tunnel; and transmit a tunnel ID configured for a local node fed back by the message receiving module; and
the message receiving module is configured to receive the message transmitted by the message transmitting module and feed back the tunnel ID configured for the local node to the message transmitting module.

Further, the device may further include: a configuring module configured to configure an MEP ID expected to be received by the head node as a destination node ID and the tunnel ID configured for the destination node of the tunnel received by the message receiving module, and an LSP ID initiated by the head node.

The message transmitting module may be specifically configured to add an object used for acquiring the tunnel ID configured for the destination node to a RSVP-TE Path message, and transmit the RSVP-TE Path message to the destination node.

The message receiving module may be specifically configured to, after receiving the RSVP-TE Path message, fill the object with the tunnel ID configured for the destination node, and transmit the object to the message transmitting module which sends the object through a Resv message; and the message receiving module may be further configured to, after receiving the message and when failing to identify the object, feed back the unidentified information to the message transmitting module by which a PathErr message is returned.

The message receiving module may be further configured to, in the case that the object is provided with a flag bit and the flag bit is set, when the destination node is configured with a tunnel ID included in the object, transmit the object to the message transmitting module by which the object is returned through the Resv message; and when it is unable to configure the tunnel ID included in the object for the destination node, feed back the information to the message transmitting module by which a PathErr message is returned; and
in the case that the flag bit is not set and when the destination node is configured with the tunnel ID included in the object or fills the object with a local tunnel ID, transmit the object to the message transmitting module by which the object is fed back to the head node through a Resv message.

The message transmitting module may be specifically configured to set a flag bit into a Flag of an LSP Attribute object included in a RSVP-TE Path message, and transmitting the RSVP-TE Path message to the destination node, so as to request a message receiving module of the destination node to send the tunnel ID configured for the destination node to the message transmitting module; and
the message receiving module of the destination node may be specifically configured to generate, according to the flag bit in the received RSVP-TE Path message, an object including the tunnel ID configured for the destination node, and transmit the object to a destination node message transmitting module of the destination node by which the object is returned through a Resv message; or place the tunnel ID configured for the destination node in an existing object according to the flag bit in the received RSVP-TE Path message, and transmit the existing object to the message transmitting module of the destination node by which the existing object is returned to a message transmitting module of the head node through a Resv message

The message transmitting module may be specifically configured to add a sub-TLV of a predefined OAM configuration TLV or a sub-TLV of a BFD configuration sub-TLV into the RSVP-TE path message, and transmit the RSVP-TE Path message to the destination node, so as to request a message receiving module of the destination node to place the tunnel ID configured for the destination node in the sub-TLV; and
the message receiving module of the destination node may be specifically configured to receive the sub-TLV included in the RSVP-TE Path message, fill the tunnel ID configured for the destination node in the sub-TLV, and transmit the sub-TLV to a destination node message transmitting module of the destination node by which the sub-TLV is returned to the message receiving module of the head node through a Resv message.

In the disclosure, the head node of the tunnel acquires the tunnel ID configured for the destination node through the message which is returned to the head node by the destination node of the tunnel and includes the tunnel ID configured for the destination node, so as to perform CV detection or other OAM functions. Therefore, the problem of interconnection and interworking among network management of different domains can be prevented when tunnel information is acquired by means of network management, so that the disclosure is easy to implement and has a wide range of application.

### BRIEF DESCRIPTION OF THE DRAWINGS

Fig. 1 is a schematic diagram of a CV detection process specified in an existing MPLS-TP standard;
Fig. 2 is a flowchart of a method for acquiring an ID of an MEP according to the disclosure;
Fig. 3 is a schematic diagram illustrating a message flow direction of an LSP during implementation of the method for acquiring an ID of an MEP according to the disclosure;
Fig. 4 is a schematic diagram illustrating a Connection object put forward by the disclosure;
Fig. 5 is a schematic diagram illustrating a Destination Tunnel ID TLV put forward by the disclosure;
Fig. 6 is a schematic diagram illustrating a Destination MEP ID TLV put forward by the disclosure; and
Fig. 7 is a structural diagram of a device for acquiring an ID of an MEP according to the disclosure.

### DETAILED DESCRIPTION

The basic idea of the disclosure is that: when a head node of a tunnel establishes a bidirectional LSP, the head node of the tunnel transmits to a destination node of the tunnel a message for acquiring a tunnel ID configured for the destination node; the destination node sends a message including the tunnel ID configured for the destination node to the head node in response to the message received from the head node; and the head node configures an MEP ID expected to be received according to received information of the destination node.

In order to make the purpose, technical solution and advantages of the disclosure clearer and easier to understand, the disclosure will be further elaborated below by illustrating embodiments and with reference to the drawings.

In the disclosure, a path state request transferred among nodes is implemented through a path (Path) message in an RSVP-TE message, and a feedback of an error occurring for the path state request is processed by a Path Err message in the RSVP-TE message. A reservation state request transferred among nodes is implemented through a reservation (Resv) message in the RSVP-TE message, and processing of a feedback of an error occurring for the reservation state request is implemented by a ResvErr message in the RSVP-TE message.

A method for acquiring an ID of an MEP according to the disclosure is elaborated below in combination with Fig. 2 and Fig. 3. Fig. 2 shows a flow of a method for acquiring an ID of an MEP according to the disclosure, and Fig. 3 shows a message flow direction of an LSP during implementation of a method for acquiring an ID of an MEP according to the disclosure. Specifically, an LSP as shown in Fig. 3 includes five network elements: A, B, C, D and Z. A bidirectional LSP is provided between the network element A and the network element Z. The network element A is a head node of a tunnel. The network element Z is a destination node of the tunnel. The LSP passes through three intermediate network elements: B, C and D.

As shown in Fig. 2, the method includes the following steps:
Step 201: When a head node of a tunnel establishes a bidirectional LSP, the head node of the tunnel transmits a message for acquiring a tunnel ID to a destination node of the tunnel.

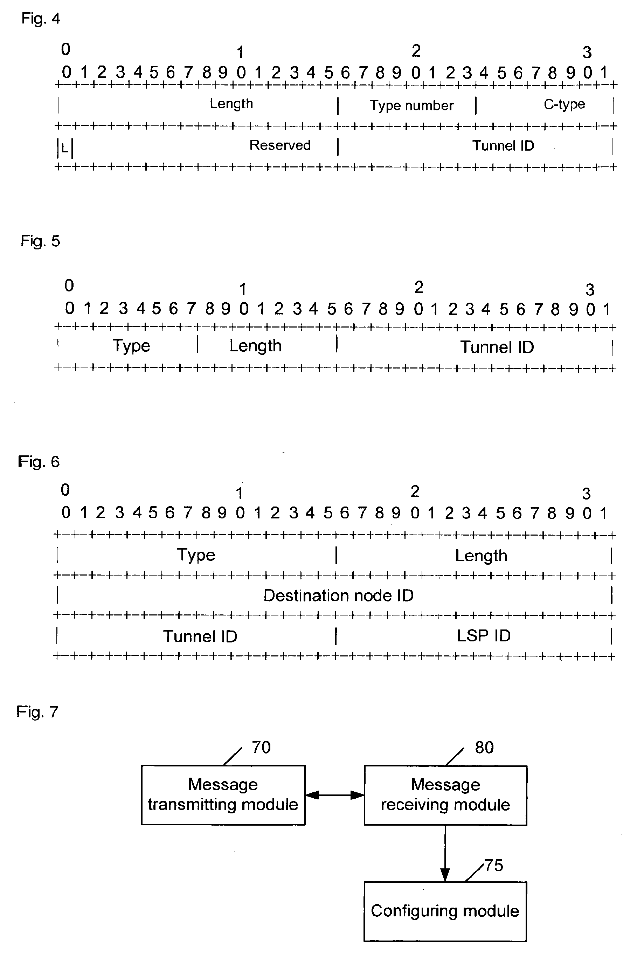

Specifically, a head node A notifies, through adding an object in a Path message transmitted to the destination node Z, a destination node Z to put a tunnel ID configured for the destination node in the object. Here, the added object may be defined as a Connection object configured to notify the destination node Z to put the tunnel ID configured for the destination node Z in the Connection object. Since the Connection object can be only configured to acquire the tunnel ID of the destination node, a format of the object may be as defined in Fig. 4. In Fig. 4, a Tunnel ID field is configured to fill in the tunnel ID of the destination node, and has a length of 16 bits; when the head node A transmits a Path message, the Tunnel ID field is empty and generally is zero completely; and an intermediate node, e.g., nodes B, C and D, may not need to identify or process the object. Further, an L flag bit may be further provided in the object. The L flag bit may be located on the first bit of a Reserved field in Fig. 4, and is specifically configured to indicate whether the head node designates the tunnel ID configured for the destination node. When the L flag bit is set, it is indicated that the head node has designated the tunnel ID configured for the destination node. The Tunnel ID field of the object is filled with the tunnel ID designated by the head node for the destination node.

The head node may further set a flag bit into a Flag of an LSP Attribute object included in a RSVP-TE Path message, and transmit the RSVP-TE Path message to the destination node, so as to request the destination node to send the tunnel ID configured for the destination node to the head node. The definition of the LSP Attribute object may specifically refer to RFC5420. A flag bit is provided in an LSP Attribute flag to indicate that the destination node needs to return the tunnel ID configured for the destination node.

The head node may further add a sub-TLV of a predefined OAM configuration TLV into the RSVP-TE Path message, and transmit the RSVP-TE Path message to the destination node, so as to request the destination node to place the tunnel ID configured for the destination node in the sub-TLV. The sub-TLV may be defined as a Destination MEP ID configured to acquire a remote end-configured MEP ID, and the format of the sub-TLV is as shown in Fig. 6. The DES Node ID is filled with a node ID of the destination node, the Tunnel ID is the tunnel ID configured for the destination node, and the LSP ID is an LSP ID in a Session object included in signalling. If the Destination MEP ID is included in the Path message, the DES NODE ID is filled with no information and the TUNNEL ID therein, and the LSP ID may be filled with an LSP ID field or nothing. Of course, the object does not need to be included in the Path message.

In all current OAM functions under MPLS-TP architecture, only a CV function needs to include an MEP ID in a transmitted message. Therefore, optionally, an object of the Destination MEP ID as defined above may serve as a sub-TLV of a BFD Configuration sub-TLV instead of being put under the OAM configuration TLV as a sub-TLV. Likewise, the object is optionally provided in the Path message.

Step 202: The destination node sends a message including the tunnel ID configured for the destination node to the head node in response to the message received from the head node.

Specifically, when the head node notifies, through adding an object to the RSVP-TE Path message transmitted to the destination node, the destination node to place the tunnel ID configured for the destination node in the object. The destination node identifies the object after receiving the message. If the object is identified, the object is filled with the tunnel ID configured for the destination node and the object is returned to the head node through a Resv message. If the object is not identified, a PathErr message is returned to the head node.

Further, when an L flag bit is provided in the object, if the L flag bit is set, it is indicated that the head node of the tunnel has designated a tunnel ID which needs to be configured for the destination node of the tunnel, and a Tunnel ID field of the object is filled with the tunnel ID designated for the destination node. When the destination node of the tunnel can use the tunnel ID of the Tunnel ID field in the object, the tunnel ID is configured and the object is optionally included in a Resv message to notify the head node of successful configuration. When the destination node of the tunnel cannot use the tunnel ID based on local consideration, a PathErr message is returned and tunnel established is unsuccessful.

If the L flag bit in the object is not set, the Tunnel ID field in the object may be filled with the tunnel ID designated by the head node, or the Tunnel ID field in the object is empty. After receiving the message, the destination node of the tunnel checks the object. If the tunnel ID recommended by the head node is provided in the Tunnel ID field, the destination node can attempt to configure the tunnel ID. If the tunnel ID cannot be used, a local tunnel ID is filled in the Tunnel ID field of the object and returned to the head node via a Resv message.

When the head node sets a flag bit into the Flag of the LSP Attribute object included in the RSVP-TE Path message, and transmits the RSVP-TE Path message to the destination node, so as to the destination node to send the tunnel ID configured for the destination node to the head node. After the RSVP-TE Path message is received by the destination node Z, the destination node Z generates, according to the indication flag bit, a TLV, or the Connection object as defined above in which is filled the local tunnel ID, and sends the Connection object to the head node A through a Resv message. The TLV may be defined as a Destination Tunnel ID. The format of the TLV is as defined in Fig. 5. A Tunnel ID field in the TLV is configured to fill with the tunnel ID of the destination node and has a length of 16 bits.

Here, after receiving the RSVP-TE Path message, the destination node Z may further place, according to the indication flag bit, the tunnel ID configured for the destination node in an existing object, and return the object to the head node through a Resv message. For example, the destination node Z may place the tunnel ID configured for the destination node in an existing Association object (the definition of the Association object refers to RFC4872) or a Session object (the definition of the Session object refers to RFC3209). Here, these existing objects need only to be extended to a certain degree. For example, the Association object needs to be included in a Resv message, but two Resv states are not associated and only the tunnel ID of the destination node is returned. Therefore, a new association type needs to be defined, an association ID is set as the tunnel ID configured for the destination node, and the meaning of an association source is remained uncharged. As for the Session object, since a field reserved previously is usually configured to place a tunnel transmitting end address, a new C-type needs to be defined for the field if the field is configured to place the tunnel ID of the destination node.

When the head node adds a sub-TLV of the predefined OAM configuration TLV, such as the destination MEP ID as described above, into the RSVP-TE Path message, and transmits the RSVP-TE Path message to the destination node, so as to request the destination node to place the tunnel ID configured for the destination node in the sub-TLV. After the RSVP-TE Path message is received by the destination node, the destination node checks whether the Destination MEP ID exists. If the Destination MEP ID exists, all contents of the Destination MEP ID field are neglected and the local tunnel ID, the Destination MEP ID field is filled with the node ID and the acquired LSP ID. If the Destination MEP ID does not exist, the Destination MEP ID is generated and the local tunnel ID, and the Destination MEP ID field is filled with the node ID and the acquired LSP ID. The Destination MEP ID is placed in a Resv message and returned to the head node.

When the head node adds the sub-TLV of the predefined BFD configuration sub-TLV into the RSVP-TE path message, and transmits the RSVP-TE path message to the destination node, so as to request the destination node to place the tunnel ID configured for the destination node in the sub-TLV. After the RSVP-TE Path message is received by the destination node, the destination node checks whether the sub-TLV exists. If the sub-TLV exists, all contents of the sub-TLV field are neglected and the local tunnel ID, the sub-TLV field is filled with the node ID and the acquired LSP ID. If the sub-TLV does not exist, the sub-TLV is generated, and the local tunnel ID, the sub-TLV field is filled with the node ID and the acquired LSP ID. The sub-TLV is placed in a Resv message and returned to the head node.

Step 203: The head node configures, according to received information of the destination node, an MEP ID expected to be received.

Specifically, the head node configures, according to a received message, in the prior art, which is returned by a destination node and includes a node ID of the destination node, an LSP ID initiated by a head node and the tunnel ID configured for the destination node returned during the above process, the MEP ID expected to be received as the node ID of the destination node::the tunnel ID configured for the destination node::the LSP ID initiated by a head node.

Fig. 7 shows a structure of a device for acquiring an ID of an MEP according to the disclosure. As shown in Fig. 7, the device includes a message transmitting module 70 and a message receiving module 80.

The message transmitting module 70 is configured to, when a head node establishes a bidirectional LSP, transmit a message for acquiring a tunnel ID configured for the destination node; and transmit a tunnel ID configured for a local node fed back by the message receiving module 80.

The message receiving module 80 is configured to receive the message transmitted by the message transmitting module 70 and feed back the tunnel ID configured for the local node to the message transmitting module 70.

Further, the device further includes: a configuring module 75 configured to configure an MEP ID expected to be received by the head node as the received node ID of the destination node, the received tunnel ID configured for the destination node and an LSP ID initiated by the head node. The format of the MEP ID may be: the node ID of the destination node::the tunnel ID configured for the destination node::the LSP ID initiated by the head node.

Further, the message transmitting module 70 is specifically configured to add an object used for acquiring the tunnel ID configured for the destination node into a RSVP-TE Path message, and transmit the RSVP-TE Path message to the destination node.

Further, the message receiving module 80 is specifically configured to, after receiving the RSVP-TE Path message, fill the object with the tunnel ID configured for the destination node of the tunnel, and transmit the object to the message transmitting module 70 which sends the object through a Resv message; and the message receiving module is further configured to, after receiving the RSVP-TE Path message and when failing to identify the object, feed back the unidentified information to the message transmitting module 70. A PathErr message is returned by the message transmitting module 70.

Further, the message receiving module 80 is further configured to, in the case that the object is provided with a flag bit and the flag bit is set, when the destination node is configured with a tunnel ID included in the object, transmit the object to the message transmitting module 70 by which the object is returned through the Resv message, and when it is unable to configure the tunnel ID included in the object for the destination node, feed back the information to the message transmitting module 70 by which a PathErr message is returned; and
in the case that the flag bit is not set, when the destination node is configured with the tunnel ID included in the object or fills the object with a local tunnel ID, transmit the object to the message transmitting module 70 by which the object is fed back to the head node through the Resv message.

Further, the message transmitting module 70 is specifically configured to set a flag bit into a Flag of an LSP Attribute object included in a RSVP-TE Path message, and transmitting the RSVP-TE Path message to the destination node, so as to request the message receiving module 80 to send the tunnel ID configured for the destination node to the message transmitting module 70; and
the message receiving module 80 is specifically configured to generate, according to the flag bit in the received RSVP-TE Path message, an object including the tunnel ID configured for the destination node of the tunnel, and transmit the object to the message transmitting module 70 by which the object is returned through a Resv message; or place the tunnel ID configured for the destination node in an existing object according to the flag bit in the received RSVP-TE Path message, and transmit the existing object to the message transmitting module 70 by which the existing object is returned to the head node through a Resv message.

Further, the message transmitting module 70 is specifically configured to add a sub-TLV of a predefined OAM configuration TLV or a sub-TLV of a BFD configuration sub-TLV into the RSVP-TE path message, and transmit the RSVP-TE Path message to the destination node, so as to request the message receiving module 80 to place the tunnel ID configured for the destination node in the sub-TLV; and
the message receiving module 80 is specifically configured to, after receiving the sub-TLV included in the RSVP-TE Path message, fill the tunnel ID configured for the destination node in the sub-TLV, transmit the sub-TLV to the message transmitting module 70 by which the sub-TLV is returned to the message receiving module 80 through a Resv message.

It should be understood that when the device is applied practically, the message transmitting module 70, the message receiving module 80 and the configuring module 75 may be located in the same node.

Specifically, when the node is a head node, the message transmitting module 70 is configured to, when the head node establishes a bidirectional LSP, transmit to the message receiving module 80 of a destination node a message for acquiring a tunnel ID configured for the destination node;
the message receiving module 80 of the destination node feeds back, according to the received RSVP-TE Path message, the tunnel ID configured for the local node to the message transmitting module 70 of the destination node, and transmits the tunnel ID of the destination node to the message receiving module 80 of the head node through the message transmitting module 70 of the destination node; and
the configuring module 75 of the head node then configures an ID of an MEP according to destination node information received by the message receiving node 80 of the head node.

The above are only the preferred embodiments of the disclosure, and are not be used to limit the scope of protection of the claims of the disclosure.

## Claims

1. A method for acquiring an Identifier (ID) of a Maintenance End Point (MEP), comprising:
when a head node of a tunnel establishes a bidirectional Label Switching Path (LSP), transmitting (201), by the head node of the tunnel, to a destination node of the tunnel a message for acquiring a tunnel ID configured for the destination node of the tunnel; and
sending (202), by the destination node, a message including the tunnel ID configured for the destination node to the head node in response to the message received from the head node.

2. The method according to claim 1, further comprising:
according to received information of the destination node, configuring (203), by the head node, an MEP ID expected to be received as a received node ID of the destination node, the received tunnel ID configured for the destination node and an LSP ID initiated by the head node.

3. The method according to claim 1, wherein the step of transmitting (201), by the head node, to the destination node the message for acquiring the tunnel ID configured for the destination node of the tunnel, comprises:
adding, by the head node, an object used for acquiring the tunnel ID configured for the destination node into a Resource Reservation Protocol-Traffic Engineering (RSVP-TE) Path message; and
transmitting the RSVP-TE Path message to the destination node.

4. The method according to claim 3, wherein the step of sending (202), by the destination node, the message including the tunnel ID configured for the destination node to the head node, comprises:
filling, by the destination node, the object with the tunnel ID configured for the destination node and sending the object to the head node through a Reservation (Resv) message;
alternatively,
when the destination node fails to identify the object, sending, by the destination node, a PathErr message to the head node.

5. The method according to claim 3, wherein the step of sending (202), by the destination node, the message including the tunnel ID configured for the destination node to the head node, comprises: in the case that the object is provided with a flag bit,
when the flag bit is set, configuring a tunnel ID included in the object for the destination node, and sending, by the destination node, the object to the head node through a Resv message; when it is unable to configure the tunnel ID included in the object for the destination node, sending, by the destination node, a PathErr message to the head node; or
when the flag bit is not set, configuring the tunnel ID included in the object for the destination node, or filling, by the destination node, the object with a local tunnel ID, and sending, by the destination node, the object to the head node through a Resv message.

6. The method according to claim 1, wherein the step of transmitting (201), by the head node, to the destination node the message for acquiring the tunnel ID configured for the destination node of the tunnel, comprises:
setting, by the head node, a flag bit into a Flag of an LSP Attribute object included in a RSVP-TE Path message, and transmitting the RSVP-TE Path message to the destination node, so as to request the destination node to send the tunnel ID configured for the destination node to the head node;
wherein the step of sending (202), by the destination node, the message including the tunnel ID configured for the destination node to the head node, comprises:
generating, by the destination node, an object including a local tunnel ID according to the flag bit in the received RSVP-TE Path message, and sending the object to the head node through a Resv message; or
placing, by the destination node, the local tunnel ID in an existing object according to the flag bit in the received RSVP-TE Path message, and sending the existing object to the head node through a Resv message.

7. The method according to claim 1, wherein the step of transmitting (201), by the head node, to the destination node the message for acquiring the tunnel ID configured for the destination node of the tunnel, comprises:
adding, by the head node, a sub-Type, Length, Value (TLV) of a predefined Operation, Administration and Maintenance (OAM) Configuration TLV or a sub-TLV of a Bidirectional Forwarding Detection (BFD) Configuration sub-TLV into a RSVP-TE Path message, and transmitting the RSVP-TE Path message to the destination node, so as to request the destination node to place the tunnel ID configured for the destination node in the sub-TLV;
wherein the step of sending (202), by the destination node, the message including the tunnel ID configured for the destination node to the head node, comprises:
receiving, by the destination node, the sub-TLV included in the RSVP-TE Path message, filling by the destination node, the sub-TLV with the local tunnel ID, and sending, by the destination node, the sub-TLV to the head node through a Resv message.

8. A device for acquiring an Identifier (ID) of a Maintenance End Point (MEP), comprising: a message transmitting module (70) and a message receiving module (80), wherein
the message transmitting module (70) is configured to, when a head node establishes a bidirectional Label Switching Path (LSP), transmit a message for acquiring a tunnel ID configured for a destination node of a tunnel; and transmit a tunnel ID configured for a local node fed back by the message receiving module (80); and
the message receiving module (80) is configured to receive the message transmitted by the message transmitting module (70) and feed back the tunnel ID configured for the local node to the message transmitting module (70).

9. The device according to claim 8, further comprising: a configuring module (75) configured to configure an MEP ID expected to be received by the head node as a destination node ID and the tunnel ID configured for the destination node received by the message receiving module (80), and an LSP ID initiated by the head node.

10. The device according to claim 8, wherein the message transmitting module (70) is configured to add an object used for acquiring the tunnel ID configured for the destination node into a Resource Reservation Protocol-Traffic Engineering (RSVP-TE) Path message, and transmit the RSVP-TE Path message to the destination node.

11. The device according to claim 10, wherein the message receiving module (80) is configured to, after receiving the RSVP-TE Path message, fill the object with the tunnel ID configured for the destination node, and transmit the object to the message transmitting module (70) which sends the object through a Reservation (Resv) message; and the message receiving module (80) is further configured to, after receiving the RSVP-TE Path message and when failing to identify the object, feed back the unidentified information to the message transmitting module (70) by which a PathErr message is returned.

12. The device according to claim 10, wherein the message receiving module (80) is further configured to, in the case that the object is provided with a flag bit and the flag bit is set, when the destination node is configured with a tunnel ID included in the object, transmit the object to the message transmitting module (70) by which the object is returned through the Resv message, and when it is unable to configure the tunnel ID included in the object for the destination node, feed back the information to the message transmitting module (70) by which a PathErr message is returned; and
in the case that the flag bit is not set, when the destination node is configured with the tunnel ID included in the object or fills the object with a local tunnel ID, transmit the object to the message transmitting module (70) by which the object is fed back to the head node through a Resv message.

13. The device according to claim 8, wherein the message transmitting module (70) is configured to set a flag bit into a Flag of an LSP Attribute object included in a RSVP-TE Path message, and transmitting the RSVP-TE Path message to the destination node, so as to request a message receiving module of the destination node to send the tunnel ID configured for the destination node to the message transmitting module (70); and
the message receiving module of the destination node is configured to generate, according to the flag bit in the received RSVP-TE Path message, an object including the tunnel ID configured for the destination node, and transmit the object to a message transmitting module of the destination node by which the object is returned through a Resv message; or place the tunnel ID configured for the destination node in an existing object according to the flag bit in the received RSVP-TE Path message, and transmit the existing object to the message transmitting module of the destination node by which the existing object is returned to a message transmitting module of the head node through a Resv message.

14. The device according to claim 8, wherein the message transmitting module (70) is configured to add a sub-Type, Length, Value (TLV) of a predefined Operation, Administration and Maintenance (OAM) Configuration TLV or a sub-TLV of a Bidirectional Forwarding Detection (BFD) Configuration sub-TLV into a RSVP-TE path message, and transmit the RSVP-TE Path message to the destination node, so as to request a message receiving module of the destination node to place the tunnel ID configured for the destination node in the sub-TLV; and
the message receiving module of the destination node is configured to receive the sub-TLV included in the RSVP-TE Path message, fill the tunnel ID configured for the destination node in the sub-TLV, and transmit the sub-TLV to a message transmitting module of the destination node by which the sub-TLV is returned to the message receiving module of the head node through a Resv message.

## Patentansprüche

1. Verfahren zur Erfassung eines Identifikators (ID) eines Wartungsendpunkts (MEP), umfassend:
wenn ein Kopfknoten eines Tunnels einen bidirektionalen Label-Switching-Pfad (LSP) festsetzt, Übertragen (201), durch den Kopfknoten des Tunnels, an einen Zielknoten des Tunnels eine Nachricht zur Erfassung eines Tunnel-ID, die für den Zielknoten des Tunnels konfiguriert ist; und
Senden (202), durch den Zielknoten, einer Nachricht, umfassend den Tunnel-ID, die für den Zielknoten konfiguriert ist, an den Kopfknoten in Reaktion auf die Nachricht, die vom Kopfknoten empfangen wurde.

2. Verfahren nach Anspruch 1, weiter umfassend:
gemäß empfangenen Informationen des Zielknotens, Konfigurieren (203), durch den Kopfknoten, eines MEP-ID, von dem erwartet wird, dass er als ein empfangener Knoten-ID vom Zielknoten empfangen wird, des empfangenen Tunnel-ID, konfiguriert für den Zielknoten, und eines LSP ID, initiiert vom Kopfknoten.

3. Verfahren nach Anspruch 1, wobei der Schritt des Übertragens (201), durch den Kopfknoten, an den Zielknoten, der Nachricht zur Erfassung des Tunnel-ID, konfiguriert für den Zielknoten des Tunnels, Folgendes umfasst:
Zugeben, durch den Kopfknoten, eines Objekts, das verwendet wird, um den Tunnel-ID, konfiguriert für den Zielknoten, zu erfassen, an eine Ressource Reservation Protocol-Traffic Engineering (RSVP-TE)-Pfad-Nachricht; und
Übertragen der RSVP-TE-Pfad-Nachricht an den Zielknoten.

4. Verfahren nach Anspruch 3, wobei der Schritt des Sendens (202), durch den Zielknoten, der Nachricht, darin eingeschlossen der Tunnel-ID, konfiguriert für den Zielknoten, an den Kopfknoten, Folgendes umfasst:
Füllen, durch den Zielknoten, des Objekts mit dem Tunnel-ID, konfiguriert für den Zielknoten, und Senden des Objekts an den Kopfknoten durch eine Reservierungs (Resv)-Nachricht;
alternativ,
wenn der Zielknoten kein Objekt identifizieren kann, Senden, durch den Zielknoten, einer PathErr-Nachricht an den Kopfknoten.

5. Verfahren nach Anspruch 3, wobei der Schritt des Sendens (202), durch den Zielknoten, der Nachricht, darin eingeschlossen der Tunnel-ID, konfiguriert für den Zielknoten, an den Kopfknoten, Folgendes umfasst: für den Fall, dass das Objekt mit einem Markierungsbit ausgestattet ist,
wenn das Markierungsbit gesetzt ist, Konfigurieren einer Tunnel-ID, die im Objekt für den Zielknoten eingeschlossen ist, und Senden, durch den Zielknoten, des Objekts an den Kopfknoten durch eine Resv-Nachricht; wenn es nicht dazu in der Lage ist, den Tunnel-ID, der im Objekt für den Zielknoten enthalten ist, zu konfigurieren, Senden, durch den Zielknoten, einer PathErr-Nachricht an den Kopfknoten; oder
wenn das Markierungsbit nicht gesetzt ist, Konfigurieren des Tunnel-ID, der im Objekt für den Zielknoten enthalten ist, oder Füllen, durch den Zielknoten, des Objekts mit einem lokalen Tunnel-ID, und Senden, durch den Zielknoten, des Objekts an den Kopfknoten durch eine Resv-Nachricht.

6. Verfahren nach Anspruch 1, wobei der Schritt des Übertragens (201), durch den Kopfknoten, an den Zielknoten, der Nachricht zur Erfassung des Tunnel-ID, konfiguriert für den Zielknoten des Tunnels, Folgendes umfasst:
Setzen, durch den Kopfknoten, eines Markierungsbits in eine Markierung eines LSP-Attributobjekts, das in einer RSVP-TE-Pfad-Nachricht enthalten ist, und Übertragen der RSVP-TE-Pfad-Nachricht an den Zielknoten, um anzufordern, dass der Zielknoten den Tunnel-ID, konfiguriert für den Zielknoten an den Kopfknoten sendet;
wobei der Schritt des Sendens (202), durch den Zielknoten, der Nachricht, darin eingeschlossen der Tunnel-ID, konfiguriert für den Zielknoten, an den Kopfknoten, Folgendes umfasst:
Erzeugen, durch den Zielknoten, eines Objekts, darin eingeschlossen einen lokalen Tunnel-ID, gemäß dem Markierungsbit in der empfangenen RSVP-TE-Pfad-Nachricht und Senden des Objekts an den Kopfknoten durch eine Resv-Nachricht; oder
Unterbringen, durch den Zielknoten, des lokalen Tunnel-ID in einem vorhandenen Objekt gemäß dem Markierungsbit in der empfangenen RSVP-TE-Pfad-Nachricht und Senden des vorhandenen Objekts an den Kopfknoten durch eine Resv-Nachricht.

7. Verfahren nach Anspruch 1, wobei der Schritt des Übertragens (201), durch den Kopfknoten, an den Zielknoten, der Nachricht zur Erfassung der Tunnel-ID, konfiguriert für den Zielknoten des Tunnels, Folgendes umfasst:
Zugeben, durch den Kopfknoten, eines Unter-Art, -Länge, -Werts (TLV) eines vorbestimmten Betriebs-, Verwaltungs- und Wartungs (OAM)-Konfiguration TLV oder eines Unter-TLV eines Bidirektionalen Weiterleitungs-Nachweis (BFD)-Konfigurations-Unter-TLV an eine RSVP-Pfad-Nachricht und Übertragen der RSVP-TE-Pfad-Nachricht an den Zielknoten, um anzufordern, dass der Zielknoten den Tunnel-ID, konfiguriert für den Zielknoten, im Unter-TLV unterbringt,
wobei der Schritt des Sendens (202), durch den Zielknoten, die Nachricht, darin eingeschlossen der Tunnel-ID, konfiguriert für den Zielknoten, an den Kopfknoten, Folgendes umfasst:
Empfangen, durch den Zielknoten, des Unter-TLV, enthalten in der RSVP-TE-Pfad-Nachricht, Füllen, durch den Zielknoten, des Unter-TLV mit dem lokalen Tunnel-ID, und Senden, durch den Zielknoten, des Unter-TLV an den Kopfknoten durch eine Resv-Nachricht.

8. Vorrichtung zur Erfassung eines Identifikators (ID) eines Wartungsendpunkt (MEP), umfassend: ein Nachrichtenübertragungsmodul (70), und ein Nachrichtenempfangsmodul (80), wobei
das Nachrichtenübertragungsmodul (70) konfiguriert ist, um, wenn ein Kopfknoten einen bidirektionalen Label-Switching-Pfad (LSP) festsetzt, eine Nachricht zur Erfassung einer Tunnel-ID, konfiguriert für einen Zielknoten eines Tunnels, zu übertragen und einen Tunnel-ID, der für eine lokale Knotenrückkoppelung konfiguriert ist, durch das Nachrichtenempfangsmodul (80) zu übertragen; und
das Nachrichtenempfangsmodul (80) konfiguriert ist, um die Nachricht zu empfangen, die vom Nachrichtenübertragungsmodul (70) übertragen wird, und den Tunnel-ID, konfiguriert für den lokalen Knoten, an das Nachrichtenübertragungsmodul rückzukoppeln.

9. Vorrichtung nach Anspruch 8, weiter umfassend: ein Konfigurierungsmodul (75), das konfiguriert ist, um einen MEP-ID zu konfigurieren, von dem erwartet wird, dass er vom Kopfknoten als eine Zielknoten-ID empfangen wird, und den Tunnel-ID, der für den Zielknoten konfiguriert ist, der vom Nachrichtenempfangmodul (80) empfangen wird, und einen LSP ID, initiiert durch den Kopfknoten.

10. Vorrichtung nach Anspruch 8, wobei das Nachrichtenübertragungsmodul (70) konfiguriert ist, um ein Objekt, das zur Erfassung des Tunnel-ID, konfiguriert für den Zielknoten, verwendet wird, einer Ressource Reservation Protocol-Traffic Engineering (RSVP-TE)-Pfad-Nachricht zuzugeben; und die RSVP-TE-Pfad-Nachricht an den Zielknoten zu übertragen.

11. Vorrichtung nach Anspruch 10, wobei das Nachrichtenempfangsmodul (80) konfiguriert ist, um, nach dem Empfang der RSVP-TE-Pfad-Nachricht das Objekt mit dem Tunnel-ID, konfiguriert für den Zielknoten, zu füllen und das Objekt an das Nachrichtenübertragungsmodul (70) zu übertragen, das das Objekt durch eine Reservierungs (Resv)-Nachricht sendet und das Nachrichtenempfangsmodul (80) weiter konfiguriert ist, um, nach dem Empfang der RSVP-TE-Pfad-Nachricht, und wenn kein Objekt identifiziert werden kann, die nicht identifizierte Information an das Nachrichtenübertragungsmodul (70) rückzukoppeln, durch das eine PathErr-Nachricht zurückgegeben wird.

12. Vorrichtung nach Anspruch 10, wobei das Nachrichtenempfangsmodul (80) weiter konfiguriert ist, um, für den Fall, dass das Objekt mit einem Markierungsbit ausgestattet ist und das Markierungsbit gesetzt ist, wenn der Zielknoten mit einem Tunnel-ID, der im Objekt eingeschlossen ist, konfiguriert ist, das Objekt an das Nachrichtenübertragungsmodul (70) zu übertragen, durch das das Objekt durch die Resv-Nachricht zurückgegeben wird, und wenn es nicht dazu in der Lage ist, den Tunnel-ID zu konfigurieren, die im Objekt für den Zielknoten eingeschlossen ist, die Information an das Nachrichtenübertragungsmodul (70) rückzukoppeln, durch das eine PathErr-Nachricht zurückgegeben wird; und
für den Fall, dass das Markierungsbit nicht gesetzt ist, wenn der Zielknoten mit dem Tunnel-ID, der im Objekt eingeschlossen ist, konfiguriert ist, oder das Objekt mit einem lokalen Tunnel-ID füllt, das Objekt an das Nachrichtenübertragungsmodul (70) zu übertragen, durch das das Objekt an den Kopfknoten durch eine Resv-Nachricht rückgekoppelt wird.

13. Vorrichtung nach Anspruch 8, wobei ein Nachrichtenübertragungsmodul (70) konfiguriert ist, um ein Markierungsbit in eine Markierung eines LSP-Attributobjekts zu setzen, das in einer RSVP-TE-Pfad-Nachricht enthalten ist, und die RSVP-TE-Pfad-Nachricht an den Zielknoten zu übertragen, um anzufordern, dass ein Nachrichtenempfangsmodul des Zielknotens den Tunnel-ID, konfiguriert für den Zielknoten, an das Nachrichtenübertragungsmodul (70) sendet; und
das Nachrichtenempfangsmodul des Zielknotens konfiguriert ist, um gemäß dem Markierungsbit in der empfangenen RSVP-TE-Pfad-Nachricht ein Objekt zu erzeugen, darin eingeschlossen der Tunnel-ID, der für den Zielknoten konfiguriert ist und das Objekt an ein Nachrichtenübertragungsmodul des Zielknotens zu übertragen, durch das das Objekt durch eine Resv-Nachricht zurückgegeben wird, oder den Tunnel-ID, konfiguriert für den Zielknoten in einem vorhandenen Objekt gemäß dem Markierungsbit in der empfangenen RSVP-TE-Pfad-Nachricht unterzubringen und das vorhandene Objekt an das Nachrichtenübertragungsmodul des Zielknotens zu übertragen, wodurch das vorhandene Objekt an ein Nachrichtenübertragungsmodul des Kopfknotens durch eine Resv-Nachricht zurückgegeben wird.

14. Vorrichtung nach Anspruch 8, wobei das Nachrichtenübertragungsmodul (70) konfiguriert ist, um eine Unter-Art, -Länge, -Wert (TLV) eines vorbestimmten Betriebs-Verwaltungs- und Wartungs (OAM)-Konfigurations-TLV oder eines Unter-TLV eines bidirektionalen Weiterleitungsnachweis (BFD)-Konfigurations-Unter-TLV an eine RSVP-Pfad-Nachricht zuzugeben und die RSVP-TE-Pfad-Nachricht an den Zielknoten zu übertragen, um anzufordern, dass das Nachrichtenempfangsmodul des Zielknotens den Tunnel-ID, konfiguriert für den Zielknoten im Unter-TLV unterbringt; und
das Nachrichtenempfangsmodul des Zielknotens konfiguriert ist, um den Unter-TLV, enthalten in der RSVP-TE-Pfad-Nachricht, zu empfangen, den Tunnel-ID, konfiguriert für den Zielknoten im Unter-TLV, zu füllen und den Unter-TLV an das Nachrichtenübertragungsmodul des Zielknotens zu übertragen, durch den der Unter-TLV an das Nachrichtenempfangsmodul des Kopfknotens durch eine Resv-Nachricht zurückgegeben wird.

## Revendications

1. Procédé d'acquisition d'un identifiant (ID) d'un point d'extrémité de maintenance (MEP), comprenant les étapes ci-dessous consistant à :
lorsqu'un noeud de tête d'un tunnel établit un chemin de commutation d'étiquettes bidirectionnel (LSP), transmettre (201), par le noeud de tête du tunnel, à un noeud de destination du tunnel, un message d'acquisition d'un ID de tunnel configuré pour le noeud de destination du tunnel ; et
envoyer (202), par le noeud de destination, un message incluant l'ID de tunnel configuré pour le noeud de destination, au noeud de tête, en réponse au message reçu en provenance du noeud de tête.

2. Procédé selon la revendication 1, comprenant en outre l'étape ci-dessous consistant à :
selon des informations reçues du noeud de destination, configurer (203), par le biais du noeud de tête, un ID de point MEP devant être reçu, sous la forme d'un ID de noeud reçu du noeud de destination, l'ID de tunnel reçu étant configuré pour le noeud de destination et un ID de chemin LSP étant initié par le noeud de tête.

3. Procédé selon la revendication 1, dans lequel l'étape de transmission (201), par le noeud de tête, au noeud de destination, du message d'acquisition de l'ID de tunnel configuré pour le noeud de destination du tunnel, comprend les étapes ci-dessous consistant à :
ajouter, par le noeud de tête, un objet utilisé pour acquérir l'ID de tunnel configuré pour le noeud de destination, dans un message de chemin de protocole de réservation de ressources-ingénierie de trafic (RSVP-TE) ; et
transmettre le message de chemin RSVP-TE au noeud de destination.

4. Procédé selon la revendication 3, dans lequel l'étape d'envoi (202), par le noeud de destination, du message incluant l'ID de tunnel configuré pour le noeud de destination, au noeud de tête, comprend les étapes ci-dessous consistant à :
remplir, par le noeud de destination, l'objet avec l'ID de tunnel configuré pour le noeud de destination, et envoyer l'objet au noeud de tête par l'intermédiaire d'un message de réservation (Resv) ;
alternativement,
lorsque le noeud de destination ne parvient pas à identifier l'objet, envoyer, par le noeud de destination, un message d'erreur de chemin « PathErr » au noeud de tête.

5. Procédé selon la revendication 3, dans lequel l'étape d'envoi (202), par le noeud de destination, du message incluant l'ID de tunnel configuré pour le noeud de destination, au noeud de tête, comprend les étapes ci-dessous consistant à, dans le cas où l'objet est pourvu d'un bit indicateur :
lorsque le bit indicateur est défini, configurer un ID de tunnel inclus dans l'objet pour le noeud de destination, et envoyer, par le noeud de destination, l'objet, au noeud de tête, par l'intermédiaire d'un message de réservation « Resv » ; lorsqu'il n'est pas possible de configurer l'ID de tunnel inclus dans l'objet pour le noeud de destination, envoyer, par le noeud de destination, un message d'erreur de chemin « PathErr », au noeud de tête ; ou
lorsque le bit indicateur n'est pas défini, configurer l'ID de tunnel inclus dans l'objet pour le noeud de destination, ou remplir, par le noeud de destination, l'objet avec un ID de tunnel local, et envoyer, par le noeud de destination, l'objet, au noeud de tête, par l'intermédiaire d'un message de réservation « Resv ».

6. Procédé selon la revendication 1, dans lequel l'étape de transmission (201), par le noeud de tête, au noeud de destination, du message d'acquisition de l'ID de tunnel configuré pour le noeud de destination du tunnel, comprend les étapes ci-dessous consistant à :
définir, par le biais du noeud de tête, un bit indicateur dans un drapeau d'un objet d'attribut de chemin LSP inclus dans un message de chemin RSVP-TE, et transmettre le message de chemin RSVP-TE au noeud de destination, de manière à demander, au noeud de destination, d'envoyer l'ID de tunnel configuré pour le noeud de destination, au noeud de tête ;
dans lequel l'étape d'envoi (202), par le noeud de destination, du message incluant l'ID de tunnel configuré pour le noeud de destination, au noeud de tête, comprend les étapes ci-dessous consistant à :
générer, par le biais du noeud de destination, un objet incluant un ID de tunnel local selon le bit indicateur dans le message de chemin RSVP-TE reçu, et envoyer l'objet au noeud de tête, par l'intermédiaire d'un message de réservation « Resv » ; ou
placer, par le biais du noeud de destination, l'ID de tunnel local dans un objet existant, selon le bit indicateur dans le message de chemin RSVP-TE reçu, et envoyer l'objet existant, au noeud de tête, par l'intermédiaire d'un message de réservation « Resv ».

7. Procédé selon la revendication 1, dans lequel l'étape de transmission (201), par le noeud de tête, au noeud de destination, du message d'acquisition de l'ID de tunnel configuré pour le noeud de destination du tunnel, comprend les étapes ci-dessous consistant à :
ajouter, par le biais du noeud de tête, un sous-type/longueur/valeur (TLV) d'un TLV de configuration de gestion, exploitation et maintenance (OAM) prédéfinie, ou un sous-TLV d'un sous-TLV de configuration de détection d'émission bidirectionnelle (BFD), dans un message de chemin RSVP-TE, et transmettre le message de chemin RSVP-TE au noeud de destination, de manière à demander au noeud de destination de placer l'ID de tunnel configuré pour le noeud de destination dans le sous-TLV ;
dans lequel l'étape d'envoi (202), par le noeud de destination, du message incluant l'ID de tunnel configuré pour le noeud de destination, au noeud de tête, comprend les étapes ci-dessous consistant à :
recevoir, par le biais du noeud de destination, le sous-TLV inclus dans le message de chemin RSVP-TE, remplir, par le biais du noeud de destination, le sous-TLV avec l'ID de tunnel local, et envoyer, par le noeud de destination, le sous-TLV, au noeud de tête, par l'intermédiaire d'un message de réservation « Resv ».

8. Dispositif destiné à acquérir un identifiant (ID) d'un point d'extrémité de maintenance (MEP), comprenant : un module de transmission de messages (70) et un module de réception de messages (80), dans lequel
le module de transmission de messages (70) est configuré de manière à, lorsqu'un noeud de tête établit un chemin de commutation d'étiquettes bidirectionnel (LSP), transmettre un message d'acquisition d'un ID de tunnel configuré pour le noeud de destination du tunnel, et transmettre un ID de tunnel configuré pour un noeud local réacheminé par le module de réception de messages (80) ; et
le module de réception de messages (80) est configuré de manière à recevoir le message transmis par le module de transmission de messages (70) et à réacheminer l'ID de tunnel configuré pour le noeud local vers le module de transmission de messages (70).

9. Dispositif selon la revendication 8, comprenant en outre : un module de configuration (75) configuré de manière à configurer un ID de point MEP devant être reçu par le noeud de tête, sous la forme d'un ID de noeud de destination, l'ID de tunnel étant configuré pour le noeud de destination reçu par le module de réception de messages (80), et un ID de chemin LSP étant initié par le noeud de tête.

10. Dispositif selon la revendication 8, dans lequel le module de transmission de messages (70) est configuré de manière à ajouter un objet utilisé pour acquérir l'ID de tunnel configuré pour le noeud de destination, dans un message de chemin de protocole de réservation de ressources-ingénierie de trafic (RSVP-TE), et à transmettre le message de chemin RSVP-TE au noeud de destination.

11. Dispositif selon la revendication 10, dans lequel le module de réception de messages (80) est configuré de manière à, suite à la réception du message de chemin RSVP-TE, remplir l'objet avec l'ID de tunnel configuré pour le noeud de destination, et transmettre l'objet au module de transmission de messages (70) qui envoie l'objet par l'intermédiaire d'un message de réservation (Resv) ; et le module de réception de messages (80) est en outre configuré de manière à, après avoir reçu le message de chemin RSVP-TE et lorsqu'il n'est pas possible d'identifier l'objet, réacheminer les informations non identifiées vers le module de transmission de messages (70) par l'intermédiaire duquel un message d'erreur de chemin « PathErr » est renvoyé.

12. Dispositif selon la revendication 10, dans lequel le module de réception de messages (80) est en outre configuré de manière à, dans le cas où l'objet est pourvu d'un bit indicateur et où le bit indicateur est défini, lorsque le noeud de destination est configuré avec un ID de tunnel inclus dans l'objet, transmettre l'objet au module de transmission de messages (70) par lequel l'objet est renvoyé, par l'intermédiaire du message de réservation « Resv », et lorsqu'il n'est pas possible de configurer l'ID de tunnel inclus dans l'objet pour le noeud de destination, réacheminer les informations vers le module de transmission de messages (70) par l'intermédiaire duquel un message d'erreur de chemin « PathErr » est renvoyé ; et
dans le cas où le bit indicateur n'est pas défini, lorsque le noeud de destination est configuré avec l'ID de tunnel inclus dans l'objet, ou lorsqu'il remplit l'objet avec un ID de tunnel local, transmettre l'objet au module de transmission de messages (70) par le biais duquel l'objet est réacheminé vers le noeud de tête par l'intermédiaire d'un message de réservation « Resv ».

13. Dispositif selon la revendication 8, dans lequel le module de transmission de messages (70) est configuré de manière à définir un bit indicateur dans un drapeau d'un objet d'attribut de chemin LSP inclus dans un message de chemin RSVP-TE, et transmettre le message de chemin RSVP-TE au noeud de destination, de manière à demander à un module de réception de messages du noeud de destination d'envoyer l'ID de tunnel configuré pour le noeud de destination au module de transmission de messages (70) ; et
le module de réception de messages du noeud de destination est configuré de manière à générer, selon le bit indicateur dans le message de chemin RSVP-TE reçu, un objet incluant l'ID de tunnel configuré pour le noeud de destination, et à transmettre l'objet à un module de transmission de messages du noeud de destination, par lequel l'objet est renvoyé par l'intermédiaire d'un message de réservation « Resv » ; ou à placer l'ID de tunnel configuré pour le noeud de destination dans un objet existant selon le bit indicateur dans le message de chemin RSVP-TE reçu, et à transmettre l'objet existant au module de transmission de messages du noeud de destination par lequel l'objet existant est renvoyé à un module de transmission de messages du noeud de tête par l'intermédiaire d'un message de réservation « Resv ».

14. Dispositif selon la revendication 8, dans lequel le module de transmission de messages (70) est configuré de manière à ajouter un sous-type/longueur/valeur (TLV) d'un TLV de configuration de gestion, exploitation et maintenance (OAM) prédéfinie, ou un sous-TLV d'un sous-TLV de configuration de détection d'émission bidirectionnelle (BFD) dans un message de chemin RSVP-TE, et à transmettre le message de chemin RSVP-TE au noeud de destination, de manière à demander à un module de réception de messages du noeud de destination de placer l'ID de tunnel configuré pour le noeud de destination dans le sous-TLV ; et
le module de réception de messages du noeud de destination est configuré de manière à recevoir le sous-TLV inclus dans le message de chemin RSVP-TE, à remplir l'ID de tunnel configuré pour le noeud de destination dans le sous-TLV, et à transmettre le sous-TLV à un module de transmission de messages du noeud de destination par lequel le sous-TLV est renvoyé au module de réception de messages du noeud de tête par l'intermédiaire d'un message de réservation « Resv ».
